# EUROPÄISCHE PATENTANMELDUNG

(11) **EP 2 692 818 A1**
(43) Veröffentlichungstag der Anmeldung: **05.02.2014**
(21) Anmeldenummer: 12178937.4
(22) Anmeldetag: 02.08.2012
(51) Int. Cl.: C09K 3/14, B24D 3/14, C04B 35/111

(54) **Schleifkorn mit Hauptoberflächen und Nebenoberflächen**

(71) Anmelder: ROBERT BOSCH GMBH, 70442 Stuttgart (DE)
(72) Erfinder: Fuenfschilling, Stefan, 78337 Öhningen (DE); Stedile, Petra, 73732 Esslingen (DE); Hejtmann, Georg, 74395 Mundelsheim (DE)

(57) **Zusammenfassung**

Die Erfindung betrifft einerseits ein Schleifkorn (10) mit mindestens zwei Hauptoberflächen (11, 11', 11") und mindestens einer Nebenoberfläche (12, 12', 12"), welche über eine erste Kante (13) mit einer ersten Hauptoberfläche (11) verbunden ist und über eine zweite Kante (13') mit einer zweiten Hauptoberfläche (11'), die mit der ersten Hauptoberfläche (11) keine gemeinsame Kante aufweist, verbunden ist. Dabei schliesst erfindungsgemäss die Nebenoberfläche (12) im Bereich der ersten Kante (13) einen stumpfen Winkel mit der ersten Hauptoberfläche (11) und im Bereich der zweiten Kante (13') einen stumpfen Winkel mit der zweiten Hauptoberfläche (11') ein. Das Schleifkorn (10) kann ein keramisches Material enthalten, insbesondere polykristallines α-Al₂O₃. Zudem sind Gesamtheiten von Schleifkörnern (10), Verfahren zum Herstellen von Schleifkörnern (10), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise weisen viele Kornformen insbesondere nach einem mechanischen Streuen wenige von der Unterlage wegweisende Kanten auf oder müssen erst speziell ausgerichtet werden, damit die Kanten von der Unterlage weg weisen.

Es ist daher eine Aufgabe der vorliegenden Erfindung, die Nachteile des Standes der Technik zumindest teilweise zu beheben. Insbesondere soll also ein Schleifkorn bereitgestellt werden, welches vergleichsweise einfach herstellbar ist, zu einem definierten Schleifmittel führt und dabei eine hohe Schneidkraft aufweist.

Diese Aufgabe wird gelöst durch ein Schleifkorn mit mindestens zwei Hauptoberflächen und mindestens einer Nebenoberfläche, welche über eine erste Kante mit einer ersten Hauptoberfläche verbunden ist und über eine zweite Kante mit einer zweiten Hauptoberfläche, die mit der ersten Hauptoberfläche keine gemeinsame Kante aufweist, verbunden ist. Dabei schliesst erfindungsgemäss die Nebenoberfläche im Bereich der ersten Kante einen stumpfen Winkel mit der ersten Hauptoberfläche und im Bereich der zweiten Kante einen stumpfen Winkel mit der zweiten Hauptoberfläche ein. Insbesondere wenn die Nebenoberfläche eben ist, sind somit die beiden Hauptoberflächen nicht parallel zueinander.

Unter einer Hauptoberfläche wird ein Flächenteil der Schleifkornoberfläche verstanden, der mindestens 5%, insbesondere mindestens 10%, bevorzugt mindestens 15% der Gesamtoberfläche des Schleifkorns bildet. Insbesondere haben die Hauptoberflächen zusammen einen Anteil von mindestens 60%, bevorzugt 70% an der Gesamtoberfläche des Schleifkorns.

Bevorzugt sind die Hauptoberflächen ähnlich, weiter bevorzugt kongruent, zueinander.

Analog wird unter einer Nebenoberfläche ein Flächenteil verstanden, der deutlich kleiner als die Hauptoberflächen ist und maximal 10%, bevorzugt maximal 5%, der Gesamtoberfläche des Schleifkorns bildet.

Haupt- und Nebenoberflächen sind bevorzugt im Wesentlichen eben und werden in der Regel von mehr als einer Kante begrenzt.

Die Nebenoberfläche schliesst jeweils bevorzugt entlang mindestens 80% einer Kante, insbesondere entlang einer gesamten Kante, einen stumpfen Winkel mit der ersten und zweiten Hauptoberfläche ein.

Die Kanten des Schleifkorns sind bevorzugt im Wesentlichen geradlinig.

Ein Schleifkorn mit einer derartigen Form hat eine Grundstruktur, die durch die Hauptoberflächen gegeben ist und sehr einfach sein kann. Dennoch weist der Schleifkornkörper durch das Vorhandensein der Nebenoberflächen weitere Kanten auf, welche die Schneidkraft erhöhen.

Die Aufgabe wird weiterhin gelöst durch ein Schleifkorn mit einem Schleifkornkörper, dessen Oberfläche mindestens zwei im Wesentlichen ebene Hauptoberflächen aufweist, welche auf den Flächen eines gedachten konvexen Polyeders liegen, insbesondere eines platonischen Körpers, archimedischen Körpers, catalanischen Körpers, Prismas oder Antiprismas, auf den Flächen eines linear verzerrten platonischen Körpers, archimedischen Körpers, catalanischen Körpers, Prismas oder Antiprismas oder auf den Flächen einer gedachten Kombination der genannten Körper, wobei der Schleifkornkörper mindestens eine flächig abgestumpfte Kante aufweist. Die Hauptoberflächen werden dabei gemäss obiger Definition verstanden.

Platonische Körper sind diejenigen konvexen Polyeder, deren Seitenflächen alle zueinander kongruente (deckungsgleiche) regelmäßige Polygone sind, und von denen in jeder Ecke gleich viele zusammenstoßen. Zu den platonischen Körpern zählen der Tetraeder, der Oktaeder und der lkosaeder, die jeweils gleichseitige Dreiecke als Seitenflächen besitzen, der Hexaeder oder Würfel, der Quadrate als Seitenflächen aufweist, und der Dodekaeder mit gleichseitigen Fünfecken als Seitenflächen.

Die archimedischen Körper sind konvexe Polyeder, deren Seitenflächen regelmäßige Vielecke sind. Die charakteristische Eigenschaft der archimedischen Körper ist, dass sich alle Ecken des Körpers zueinander völlig gleich verhalten.

Prismen, Antiprismen und die fünf platonischen Körper werden nicht zu den archimedischen Körpern gezählt.

Zu den archimedischen Körpern zählen insbesondere die platonischen Körper mit gekappten Ecken (Tetraeder-, Hexaeder-, Oktaeder-, Dodekaeder- und Ikosaederstumpf).

Ein Prisma wird begrenzt durch genau zwei kongruente n-Ecke und n Parallelogramme. Bei den n-Ecken kann es sich insbesondere um regelmäßige n-Ecke handeln. Die genannten Parallelogramme sind im Fall eines geraden Prismas Rechtecke, insbesondere Quadrate. Zu jeder natürlichen Zahl n größer gleich drei existiert ein solches Prisma. An einer Ecke treffen stets ein n-Eck und zwei Parallelogramme zusammen.

Ein Antiprisma wird begrenzt durch genau zwei kongruente n-Ecke und 2n insbesondere gleichseitige Dreiecke. Zu jeder natürlichen Zahl n größer gleich drei existiert ein solches Antiprisma. An einer Ecke treffen stets ein n-Eck und drei Dreiecke zusammen.

Die catalanischen Körper besitzen nur eine Flächenart, nämlich identische nichtregelmäßige Vielecke, haben aber mindestens zwei verschiedene Arten von Ecken.

Bei einem linear verzerrten, d.h. einem entlang mindestens einer Achse, insbesondere einer Symmetrieachse gestauchten oder gestreckten, platonischen Körper, archimedischen Körper, catalanischen Körper, Prisma oder Antiprisma sind gegenüber der unverzerrten Form nicht alle Symmetrien erhalten. Da die genannten Formen aber eine Vielzahl von Symmetrien aufweisen, besitzt der linear verzerrte entsprechende Körper immer noch eine Anzahl von Symmetrien. Ein Quader ist beispielsweise ein linear verzerrter Würfel, der zwar weniger Symmetrien als eine Würfel, aber immer noch viele Regelmässigkeiten aufweist.

Anstelle von einer Kante des konvexen Polyeders werden die an diese Kante angrenzenden Flächen bei einer erfindungsgemäss flächig abgestumpften Kante von einer Nebenoberfläche begrenzt. Die Oberfläche des Schleifkorns weist daher mindestens eine Nebenoberfläche auf, welche auf der Fläche der abgestumpften Kante liegt.

Eine flächig abgestumpfte Kante ergibt sich, indem von einem gedachten Grundkörper ein Teilstück, enthaltend eine gesamte Kante, parallel zu der Kante abgeschnitten wird. Die Schnittfläche ist bevorzugt eben, wodurch eine ebene Nebenoberfläche entsteht.

Die Schleifkornform ergibt sich also durch eine vergleichsweise einfache Grundform, die durch die Abstumpfung mindestens einer Kante weitere Kanten aufweist.

Gegenstand der vorliegenden Erfindung sind auch derartige Schleifkornkörper, die aus Teilkörpern zusammengesetzt sind, wobei einer der Teilkörper ein konvexer Polyeder mit mindestens einer abgestumpften Kante ist. Der andere Teilkörper kann beispielsweise eine Art Sockel bilden, der aus demselben oder einem anderen Material besteht. Bevorzugt ist der Schleifkornkörper einstückig ausgebildet. Insbesondere beim mechanischen Streuen fällt der Schleifkornkörper, z.B. aufgrund der Schwerkraft oder einer anderen äusseren Kraft bevorzugt auf den Sockel und die Kanten des konvexen Polyeders weisen von dem Untergrund weg.

In einer bevorzugten Ausführung hat ein Schleifkorn einen Körper wie vorher beschrieben, und ein Teil der Flächen, bevorzugt mindestens drei Flächen, des Schleifkorns, insbesondere Hauptoberflächen, liegen auf den Flächen einer gedachten Pyramide oder eines gedachten Pyramidenstumpfes, insbesondere auf den Flächen eines Tetraeders.

Bevorzugt sind alle Kanten des Tetraeders abgestumpft, so dass der Schleifkornkörper einerseits eine kompakte und stabile Form aufweist und gleichzeitig eine Vielzahl von Schneidkanten. Zudem ist der Schleifkornkörper symmetrisch ausgebildet, sodass es egal ist, auf welcher Hauptoberfläche er beim Streuen zum Liegen kommt.

Vorteilhafterweise ist jede Hauptoberfläche mit mindestens einer anderen Hauptoberfläche über eine Nebenoberfläche verbunden.

Da jede Fläche von Kanten begrenzt wird, ergeben sich somit eine Vielzahl von Kanten, was die Schneidkraft des Schleifkorns erhöht.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschliesst.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise werden auch Abschnitte der Aussenkontur, insbesondere Kanten, als im Wesentlichen geradlinig angesehen, wenn sie zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der oben definierten Grösse des Schleifkorns beträgt. Ein Punkt der Aussenkontur wird im Wesentlichen als Ecke angesehen, wenn der Krümmungsradius dort höchstens 10 %, bevorzugt höchstens 5 %, besonders bevorzugt höchstens 2 % der Grösse des Schleifkorns beträgt. Des Weiteren werden Hauptoberflächen und Nebenoberflächen als im Wesentlichen eben verstanden, wenn sie gewölbt sind und Krümmungsradien aufweisen, die mindestens das Doppelte, bevorzugt mindestens das Fünffache, besonders bevorzugt mindestens das Zehnfache der Grösse des Schleifkorns betragen.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Bevorzugt befindet sich eine Vielzahl von Vertiefungen in der Giessform, sodass mit einem Giessvorgang eine Vielzahl von Schleifkornkörpern gegossen werden kann.

In einer Weiterentwicklung des aus US 5,201,916 bekannten Verfahrens kann zur Herstellung einiger erfindungsgemässer Ausführungsformen die oben genannte Giessform vorteilhafterweise nur ein Teil eines mehrteiligen Giesswerkzeugs sein, welches zusätzlich mindestens ein Formelement, insbesondere eine weitere Giessform oder ein Stempelelement, umfasst, mit welchem ergänzend zu der in der ersten Giessform geformten Oberfläche zumindest ein Teil der restlichen Oberfläche des Schleifkorns formbar ist. So können beispielsweise Stempelelemente vorgesehen sein, die in die gefüllten Vertiefungen der ersten Giessform geführt werden.

Bevorzugt schliessen die Stempelelemente die Vertiefungen der Giessform nicht vollständig ab, so dass die flüchtige Komponente der Dispersion entweichen kann.

Kompliziertere Formen von Schleifkornkörpern sind in zusammensetzbaren Giessformen, ähnlich wie im Spritzgussverfahren, formbar. Dazu weist mindestens eine Giessform mindestens eine Einfüllöffnung auf, durch welche die Dispersion in die Vertiefungen gelangen kann.

Die Giessform und/oder das Stempelelement kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so auf einer Schleifmittel-Unterlage orientiert, dass eine Vielzahl von Kanten von der Unterlage weg weist. Auf eine aufwändigere elektrostatische Streuung kann also verzichtet werden.

Ferner richtet sich die Erfindung auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

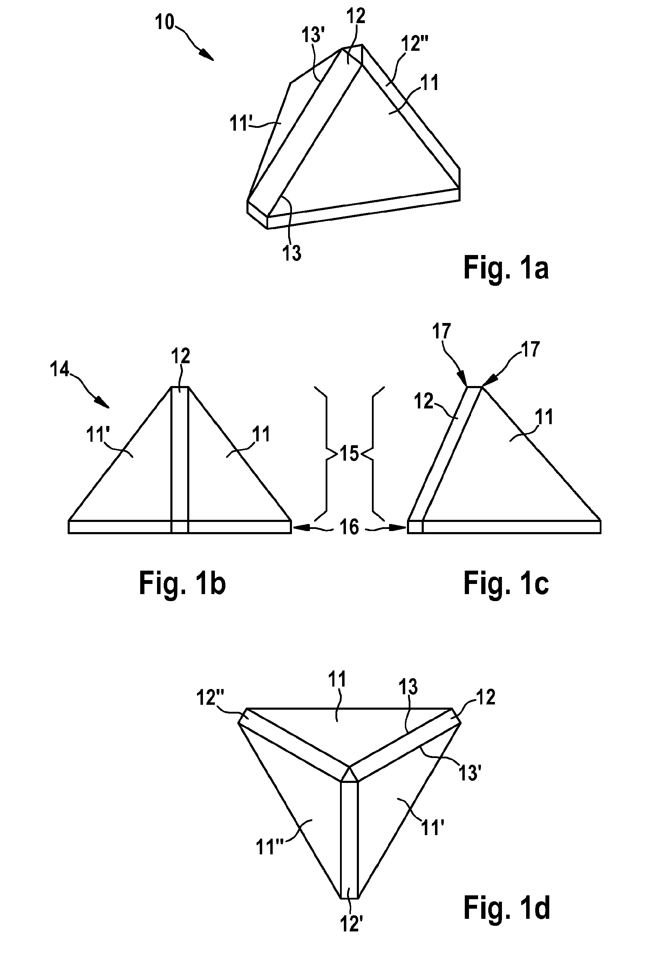

Im Folgenden wird die Erfindung mit Hilfe mehrerer Ausführungsbeispiele und Zeichnungen näher erläutert. Dabei zeigen
Figur 1a: eine Ausführungsform eines erfindungsgemässen Schleifkorns in perspektivischer Ansicht;
Figur 1b: die Ausführungsform eines erfindungsgemässen Schleifkorns in einer ersten Seitenansicht;
Figur 1c: die Ausführungsform eines erfindungsgemässen Schleifkorns in einer zweiten Seitenansicht;
Figur 1d: die Ausführungsform eines erfindungsgemässen Schleifkorns in Draufsicht.

Figur 1a zeigt eine Ausführungsform eines erfindungsgemässen Schleifkorns 10 in perspektivischer Ansicht. Figur 1b zeigt die erste Ausführungsform des erfindungsgemässen Schleifkorns 10 in einer ersten Seitenansicht, Figur 1c in einer zweiten Seitenansicht. Figur 1d zeigt das Schleifkorn 10 in Draufsicht.

Das Schleifkorn 10 besitzt drei Hauptoberflächen 11, 11', 11" und drei Nebenoberflächen 12, 12', 12". Die Nebenoberfläche 12 ist über eine erste Kante 13 mit einer ersten Hauptoberfläche 11 verbunden und über eine zweite Kante 13' mit einer zweiten Hauptoberfläche 11', die mit der ersten Hauptoberfläche 11 keine gemeinsame Kante bildet, verbunden.

Die Nebenoberfläche 12 schliesst im Bereich der ersten Kante 13 einen in den Figuren nicht explizit dargestellten stumpfen Winkel mit einer ersten Hauptoberfläche 11 ein und im Bereich der zweiten Kante 13' einen stumpfen Winkel mit einer zweiten Hauptoberfläche 11'.

Analog ist die Nebenoberfläche 12' über eine erste Kante mit der Hauptoberfläche 11' verbunden und über eine zweite Kante mit der Hauptoberfläche 11" verbunden, und die Nebenoberfläche 12" ist über eine erste Kante mit der Hauptoberfläche 11" verbunden und über eine zweite Kante mit der Hauptoberfläche 11 verbunden.

Das Schleifkorn 10 besitzt einen Schleifkornkörper 14, dessen Oberfläche 15 drei ebene Hauptoberflächen 11, 11' und 11"aufweist, welche auf den Flächen eines gedachten konvexen Polyeders liegen, hier auf einem Tetraeder, dessen ebenfalls gedachte Seitenkanten flächig abgestumpft sind.

Der Schleifkornkörper 14 ist gedanklich aus Teilkörpern zusammengesetzt, zum einen aus dem Tetraeder mit abgestumpften Kanten 15, zum anderen aus einem Sockel 16, welcher die Form eines Prismas hat, dessen Grundfläche der des Tetraeders mit den abgestumpften Kanten 15 entspricht.

Natürlich ist es auch denkbar und liegt im Rahmen der Erfindung, dass der Schleifkornkörper im Gegensatz zu den Figuren 1a bis 1d nur aus einem Tetraeder mit abgestumpften Kanten 15 besteht, jedoch keinen Sockel enthält.

Beim mechanischen Streuen auf eine Unterlage fällt das Schleifkorn 10 bevorzugt auf den Sockel 16, sodass die Kanten 13, 13' und Ecken 17 von der Unterlage weg weisen.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Für einige Ausführungsformen des Schleifkorns kann ein wie oben beschriebenes zusätzliches Formelement verwendet werden, beispielsweise eine weitere Giessform, mit welchem ergänzend zu der in der Giessform geformten Oberfläche zumindest ein Teil der restlichen Oberfläche des Schleifkorns formbar ist. Daraufhin wird die flüchtige Komponente, also das Wasser, aus der Dispersion entfernt. Hierdurch entsteht ein Schleifkorn-Vorprodukt, welches aus der Giessform entfernt wird. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10) mit mindestens zwei Hauptoberflächen (11, 11', 11") und mindestens einer Nebenoberfläche (12, 12', 12"), welche über eine erste Kante (13) mit einer ersten Hauptoberfläche (11) verbunden ist und über eine zweite Kante (13') mit einer zweiten Hauptoberfläche (11'), die mit der ersten Hauptoberfläche (11) keine gemeinsame Kante aufweist, verbunden ist,
**dadurch gekennzeichnet,**
**dass** die Nebenoberfläche (12) im Bereich der ersten Kante (13) einen stumpfen Winkel mit einer ersten Hauptoberfläche (11) einschliesst und im Bereich der zweiten Kante (13') einen stumpfen Winkel mit einer zweiten Hauptoberfläche (11') einschliesst.

2. Schleifkorn (10) mit definierter Form, insbesondere Schleifkorn (10) gemäss Anspruch 1,
**dadurch gekennzeichnet, dass**
das Schleifkorn (10) einen Schleifkornkörper (14) aufweist, dessen Oberfläche (15) mindestens zwei im Wesentlichen ebene Hauptoberflächen (11, 11', 11") aufweist, welche auf den Flächen eines gedachten konvexen Polyeders liegen, insbesondere eines platonischen Körpers, archimedischen Körpers, catalanischen Körpers, Prismas oder Antiprismas, auf den Flächen eines linear verzerrten platonischen Körpers, archimedischen Körpers, catalanischen Körpers, Prismas oder Antiprismas oder auf den Flächen einer gedachten Kombination der genannten Körper, wobei der Schleifkornkörper mindestens eine flächig abgestumpfte Kante aufweist.

3. Schleifkorn (10) gemäss Anspruch 1 oder 2,
**dadurch gekennzeichnet, dass**
ein Teil der Flächen (11, 11', 11") des Schleifkorns (10), insbesondere Hauptoberflächen, auf den Flächen einer gedachten Pyramide oder eines gedachten Pyramidenstumpfes liegen, insbesondere auf den Flächen eines Tetraeders.

4. Schleifkorn (10) gemäss einem der vorangehenden Ansprüche,
**dadurch gekennzeichnet, dass**
jede Hauptoberfläche (11, 11', 11") mit mindestens einer anderen Hauptoberfläche (11, 11', 11') über eine Nebenoberfläche (12, 12', 12") verbunden ist.

5. Schleifkorn (10) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

6. Gesamtheit von Schleifkörnern (10),
**dadurch gekennzeichnet, dass**
sie mindestens 20 Gew.-%, bevorzugt mindestens 50 Gew.-%, besonders bevorzugt mindestens 90 Gew.-% Schleifkörner (10) nach einem der vorangehenden Ansprüche enthält.

7. Verfahren zum Herstellen mindestens eines Schleifkorns (10) oder einer Gesamtheit von Schleifkörnern (10) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (10) zu erhalten.

8. Giessform zum Herstellen mindestens eines Schleifkorns (10) nach einem der Ansprüche 1 bis 5, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10) ist.

9. Schleifartikel, enthaltend eine Gesamtheit von Schleifkörnern (10) gemäss Anspruch 6.

10. Verfahren zum Herstellen eines Schleifartikels gemäss Anspruch 9, enthaltend einen Schritt, in dem eine Gesamtheit von Schleifkörnern (10) gemäss Anspruch 6 an und/oder in einem Substrat fixiert wird, insbesondere mittels eines Bindemittels.

11. Verfahren zum Schleifen einer Oberfläche, insbesondere einer lackierten Oberfläche, mit einem Schleifartikel gemäss Anspruch 9.
